# EUROPEAN PATENT APPLICATION

(11) **EP 4 372 406 A1**
(43) Date of publication of application: **22.05.2024**
(21) Application number: 22207801.6
(22) Date of filing: 16.11.2022
(51) Int. Cl.: G01S 7/41, G01S 13/88

(54) **RADIO FREQUENCY SYSTEM AND RELATED METHOD FOR COUNTING AND ACTIVITY RECOGNITION**

(71) Applicant: Imec VZW, 3001 Leuven (BE); Katholieke Universiteit Leuven KU Leuven Research & Development, 3000 Leuven (BE); Universiteit Antwerpen, 2000 Antwerpen (BE)
(72) Inventor: Berkvens, Rafael, 2910 Essen (BE); Sakhnini, Adham, 3001 Heverlee (BE)
(74) Representative: IP HILLS NV

(57) **Abstract**

A radio frequency system (1) for characterizing one or more groups of individuals (2) in a space (3), comprising:
- a transmitter (101) transmitting two waveforms (11;12);
- a receiver (102) configured to:
o receive echoes (21;22) of the waveforms (11;12);
o generate a range profile comprising a range distribution of the echoes (21;22);
o generate filtered range profiles by filtering static clutter;

- a processing unit (103) configured to:
o range normalize the filtered range profiles;
o generate an updated spatial map or an updated combined range profile after thresholding;
o determine a total power between two distances in the updated spatial map or in the updated combined range profile;
o generate therefrom one or more power metrics relating the total power to a density and/or an activity of the groups of individuals (2) in the space (3).

## Description

### Technical Field

The present invention generally relates, amongst others, to hardware and to a related computer-implemented method for monitoring of groups of individuals. More particularly, it relates to a radio frequency system and a related computer-implemented method for counting and/or estimating an activity of groups of individuals, such as for example in the context of crowd management of a crowd.

### Background

Counting and/or estimating movements within groups of individuals is relevant in many different technical domains. For example, the individuals may be human beings forming a crowd, and it might be relevant to monitor people and their movements for example in the context of the management of the crowd safety in a specific area. Alternatively, the individuals may for example be livestock and/or cattle and/or poultry, and it might be relevant to estimate a density of animals for example on and off trucks and livestock vessels to facilitate the estimation of stocking densities, pen space allowances and feed stores. Additionally, moving livestock tends to change direction. There is a need to identify irregular movements which could lead to injuries for the animals. Alternatively, the individuals may for example be vehicles or any means of transportation such as bikes, cars, trucks, etc. which are circulating along a specific road, or within a specific neighborhood, or which are passing a particular crossroad coming from and/or going to different directions. It may be relevant for authorities and/or for the automotive industry to characterize groups of individuals in the context of multimodal traffic for example for safety reasons.

Let's consider in more details the monitoring of a groups of human beings forming crowd in a specific area. Crowd counting is important for several reasons. First, crowd counting enables crowd management to ensure safety of the groups of individuals in this specific space or environment. Crowd counting and monitoring further allows the application of social distance measures to prevent infectious disease spreading. Crowd counting allows operational optimization of food, drinks, and other supplies for example in the context of an event such as a conference, a concert, a festival, etc.

Characterizing one or more groups of individuals forming a crowd in a space remains challenging. When a crowd reaches of a few hundreds of people, all current crowd counting solutions show error margins and even the most hawkish commercial solutions do not reach maximum accuracy. When elaborating on crowd counting, it is important to consider the distinction between gate-based counting and zone-based counting. Gate-based counting estimates a crowd count by integrating people passing a defined gate. Vaccine certificate registrations are an example of gate-based counting. Zone-based counting estimates the crowd count by direct observation. The lack of maximum accuracy in the detection is not problematic for most crowd counting applications. However, the errors accumulate over time with gate-based counting, making it an unreliable solution for example for crowd management, social distance measures, and operational optimizations. Moreover, with gate-based counting, it is impossible to know where people are crowding in the area defined by the gates. This leads to the need for additional zone-based counting. Even though the lack of maximum accuracy does not accumulate over time with zone-based counting, the solutions for zone-based counting often rely on systems such as cameras observing the crowd. These solutions raise issues with privacy, and their accuracy remains highly dependent on light conditions and absence or presence of obstructions.

Conventional radar systems operate on individual objects, such as individual human beings, or animals, or vehicles, etc. Even though radar systems alleviate the first two issues experienced during zone-based counting, the counting procedure performed with conventional radar systems relies on explicit resolution, detection, association and tracking of individual objects in the field of view of the radar. Such systems are limited by the resolution and often by the required processing power. For instance, separating members of a dense crowd of humans standing shoulder to shoulder would require a spatial resolution in the order of a few centimeters, or bandwidth in the range of gigahertz. In fact, if the crowd is sufficiently dense one may not be able to resolve each individual since the members might not even be spatially separable. It may also be impossible to physically resolve each individual since the members are touching each other. In addition to the challenging resolution, such a setup would require sophisticated processing, association, tracking and bookkeeping schemes to keep track of every member of the crowd as the number of members may be in the order of hundreds. Furthermore, besides consuming a lot of frequency spectra and being algorithmically challenging, such a setup would potentially require a high-power consumption. Field experience suggests that only up to twenty well separated individual objects can be counted reliably with current radar methods. Assessing large unresolved groups of individuals such as crowds comprising more than twenty people, or packs of livestock, or multimodal traffic, appears to be an unsolved problem with radar technology.

### Summary

Sensing and monitoring large groups of individuals therefore requires a fundamentally different approach. It is thus an object of embodiments of the present invention to propose a computer-implemented method and a radio frequency system which do not show the inherent shortcomings of the prior art. More specifically, it is an object of embodiments of the present invention to propose a method and a radio frequency system to accurately and robustly estimating a size and/or an activity of groups of individuals without the need for the implementation of high spatial resolution, object association or object tracking solutions.

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for determining a count and/or a density of groups of individuals and for recognizing activities such as movements within these groups of individuals.

Amongst others, it is an object of embodiments of the invention to provide a solution which does not need to detect individuals in a space, which does not depend on light conditions in the space, and which remains cost efficient for large groups of individuals.

This object is achieved, according to a first example aspect of the present disclosure, by a radio frequency system for characterizing one or more groups of individuals in a space, the radio frequency system comprising:
- at least one transmitter configured to transmit at least two waveforms;
- at least one receiver to which the waveforms are at least partially known; wherein the receiver is configured to:
   ∘ receive echoes of the waveforms being reflected by the groups of individuals and/or the space;
   ∘ therefrom and for each waveform, generate a range profile comprising a range distribution of the echoes; and
   ∘ filter static clutter out of the range profiles based on the waveforms known to the receiver, thereby generating filtered range profiles; and
- a processing unit configured to:
   ∘ range normalize the filtered range profiles;
   ∘ combine the filtered range profiles from the transmitter and the receiver, thereby generating a spatial map or at least one combined range profile;
   ∘ threshold the spatial map or the combined range profile, thereby generating an updated spatial map or an updated combined range profile;
   ∘ determine a total power between at least two distances in the updated spatial map or in the updated combined range profile; and
   ∘ generate therefrom one or more power metrics, wherein the power metrics relate the total power to a density and/or an activity of the groups of individuals in the space.

With the radio frequency system according to the present disclosure, it is possible to count groups of individuals in a specific area and/or to determine their activity in the specific area. Additionally, it becomes possible to count and characterize groups of individuals with the radio frequency system according to the present disclosure according to their level of activity by using the motion information of the groups of individuals, without the need for high spatial resolution, object association or object tracking. Instead of a conventional radar system which relies on explicit detection of individual objects, the radio frequency system according to the present disclosure does not resolve, detect and/or track each individual member of one or more groups, and the radio frequency system according to the present disclosure does not count and/or determine an activity of each constituting member of the groups. This allows the efficient monitoring and characterization of larger groups of individuals than the groups which can be resolved by radar system known from the prior art. In other words, the radio frequency system according to the present disclosure does not need to detect individuals of the groups, it does not depend on light conditions in the space in which the groups of individuals evolve, and only a single sensor is needed to observe large groups of individuals, such as for example a few hundreds of individuals, thereby making the radio frequency system according to the present disclosure cost efficient.

In the context of the present disclosure, an individual is one or more of the following types: a person, an animal, an animated object or unanimated object, a vehicle, a means of transportation, etc. A group of individual in the context of the present disclosure may comprise one or more individuals of the same type and/or one or more individuals of different types. For example, a group of individuals may comprise one or more human beings being pedestrians, and the same group of individuals may comprise one or more cars and/or one or more bikes. Alternatively, a group of individuals may comprise only one type of individuals. For example, a group of individuals may comprise only people or only animals. Additionally, the radio frequency system according to the present disclosure may monitor several groups of individuals which either comprise the same types of individuals or alternatively which comprise different types of individuals.

In the context of the present disclosure, a space is an area, or a territory, or a sector, or a zone such as a neighborhood, or an environment. The term space refers to an area that is for example at least partially empty or available, and which can be of any size. Alternatively, a space is an area comprising one or more objects, such as for example non-transparent materials such as walls, support pillars, canvas, trees, vehicles, objects, etc. For example, in the context of the present disclosure, a space is an outside area as an open space, enclosed or unenclosed, covered or uncovered. For example, in the context of the present disclosure, a space is an inside area as an open space, enclosed or unenclosed, covered or uncovered. For example, in the context of the present disclosure, a space is an area between two objects, enclosed or unenclosed, covered or uncovered. In the context of the present disclosure, a particular kind of space is the area that is available for a particular activity or for hosting a certain type of objects. For example, a space is a concert hall, or a festival field, or a road, or a field, etc. In the context of the present disclosure, a space may comprise one or more regions, or surveillance regions, wherein a region corresponds to a portion of the total surface area of the space. A sum of the surface areas of all the regions corresponds to a total surface area of the space.

In the context of the present disclosure, the radio frequency system according to the present disclosure comprises at least one transmitter and at least one receiver with a shared field of view over one or more groups of individuals in a space. The transmitters and receivers operate in the radio frequency spectrum, for example typically but not limited to the preferred range 600 MHz to 300 GHz. Lower frequencies have the advantage of high penetration within the groups of individuals, whereas higher frequencies have the advantage of rejecting the clutter, i.e., static background, more efficiently, and higher frequencies can also distinguish/resolve motions betters. Higher frequencies also imply that the antennas can be made smaller while lower frequencies generally have better coverage. With appropriate data processing, the performance of the radio frequency system according to the present disclosure, such as for example its coverage and/or its signal to noise ratio and/or its resolution, will always improve as the number of antennas increase. The preferred number of antennas is therefore dictated by the required performance and several other factors such as hardware availability, cost, deployment constraints such as area reserved for the system and power consumption.

The transmitters according to the present disclosure transmit a sequence of advantageously orthogonal waveforms that are at least partially known to the one or more receivers. A waveform in the context of the present disclosure comprises at least two pulses. In other words, a sequence of waveforms may also be referred to as a pulse train and the duration of the pulse train is often referred to as coherent processing interval. The pulse train is set to consists of at least two pulses, or waveform sequence. This way, it is possible to enable background subtraction, often referred to as clutter suppression in the context of conventional radar systems. If multiple transmitters are used, then the waveform orthogonality can be established for example by frequency-, time- or code-domain separation and implies that the receivers can recover the sum of echoes originating from each transmitter. This allows the subsequent range profiles, or channel impulse responses, originating from each pair of transmitters and receivers to be recovered without interference. The separation of transmit and receive signals improves the spatial diversity of the system which is advantageous from a performance point of view. Alternatively, the transmitters according to the present disclosure may transmit non-orthogonal waveforms. In particular and advantageously if the transmitters are collocated, the system may transmit the same waveforms, but phase and amplitude scaled with respect to each other in order to steer the waveform towards certain regions in the field of view. This is typically referred to as transmit beamforming and has the advantage of focusing the transmission as well as simplifying the receive processing. Some schemes of non-orthogonal transmission also allow for a certain recovery of transmit signals. However, they typically involve matrix inversions which entails a significantly increased computational burden at each receiver. It may also enhance the noise when the processing is non-optimal. In the context of the present disclosure, this is considered a viable, but not a generally preferred, transmission scheme.

As understood in the context of the present disclosure, the transmitted waveforms impinge on the groups of individuals and a set of echoes are backscattered towards the receivers. The at least one receiver demodulates and digitizes the received signals. If the transmission is orthogonal, then the receiver also recovers the signals originating from each of the transmitters. The signal recovery is sometimes referred to as multiple-input multiple-output demultiplexing or MIMO demultiplexing. Under such circumstances, one may also refer to the transmission as being MIMO multiplexed. When the signals are multiplexed in time, the multiplexing corresponds to each transmitter transmitting at separate and non-overlapping time instances. The demultiplexing corresponds to sampling and organizing the signals at different time instances. When the transmission is non-orthogonal, the receiver has the option to recover the transmit signals if the radio frequency system allows. In the case of transmit beamforming, the receiver does not need to perform any demultiplexing. Based on the demodulated, digitized and demultiplexed signals, the receiver generates a set of range profiles from each of the waveforms received from each of the transmitters. For example, if there are M transmitters and L pulses in the pulse train, then each receiver generates a total of M*L range profiles.

In the context of the present disclosure, when the radio frequency system according to the present disclosure is used for crowd counting, the crowd is for example attending a festival with tens to hundreds, and possibly thousands of visitors. The festival may for instance be a music festival or a food festival with the associated crowds. The festival may for example take place on a town square or a marketplace or in field, etc. A crowd in the context of the present disclosure comprises at least one group of individuals. A crowd may be so dense that the bandwidth of the waveform may not be sufficient to resolve each individual member of the crowd. The radio frequency system according to the present disclosure is efficient with a spatial resolution in the range of decimeters or meters, where several members of the crowd may originate in a single spatial resolution cell. In addition, the counting procedure according to the present disclosure has a low complexity and may in many cases be implemented in conventional signal processing hardware. In addition to simplicity and cost efficiency, this also facilitates energy efficiency. Additionally, since only a low spatial resolution is required, the radio frequency system according to the present disclosure only requires a modest amount of bandwidth to be operated. This implies that it can advantageously be implemented in the license free industrial, scientific, and medical such as ISM frequency bands. This provides advantages in terms of regulation and deployment.

In the context of the present disclosure, a range profile corresponds to the complex amplitude distribution of the echoes reflected from the scatterers in the space with respect to the radial distance, i.e. with respect to either the monostatic or bistatic radial distance. Scatterers in the space correspond to the groups of individuals, and/or the individuals, and/or other reflecting objects in the shared field of the view of the transmitters and receivers. In other words, the range profiles generated at a given receiver represent the amplitude of the received echoes plus noise at a given distance with respect to the corresponding transmitter. In the case of multiple collocated transmitters, the distance is with respect to the center of the transmit array.

Based on the range profiles generated by the receiver, a clutter suppression procedure, also referred to as background subtraction is carried out by the receiver. The purpose is to remove the influence of static objects in the space, consisting of for instance ground and/or building reflections and/or other objects. The remaining signals in the filtered range profile corresponds to motions carried out by the groups of individuals. This provides the basis for counting the groups of individuals. The background subtraction is a critical aspect of the present disclosure because it filters out static biases in the space and avoids pathological counting scenarios caused by the space. A pathological counting scenario may for instance occur when there are big metallic reflectors in the field of view of the transmitters and the receivers. Such objects reflect radio waves containing high power, typically orders of magnitudes stronger than individuals such as humans. Hence, in the context of crowd counting, if a crowd would appear and block strong reflectors, the received power would not increase but rather decrease and give rise to negative crowd counts. This kind of pathological behavior is mitigated by the background subtraction, or synonymously clutter suppression, performed by the receiver.

The clutter suppression according to the present disclosure is advantageously carried out by filtering the at least two range-profiles along the pulse indices. This may for instance be done with high-pass FIR and IIR filters. One may also use a mean removal, which can be carried out as follows: for a given resolution cell, the average of that resolution cell across the range profiles is first performed. This average is then subtracted at the corresponding resolution cell at each of the range-profiles. Note that the clutter suppression does not require any calibration against an empty space. In the particular case of long integration times, or coherent processing intervals, and/or high carrier frequencies, the background subtraction can be sufficiently sharp for the receiver to recognize even small motions of the groups of individuals. For example, in the context of crowd counting, if the radio frequency system operates at a 60 GHz carrier frequency and transmits over a period of 25ms, then the smallest detectable velocity becomes approximately 0.1m/s when the transmitter and receiver is collocated. This is deemed sufficient for the basis of counting and the resolution is even sufficient to capture reflections caused by micro-motions of the crowd. A micro-motion is understood in the context of the present disclosure as a moving body part/limb in the Doppler domain.

In the context of the present disclosure, it is important to note that the generation of range profiles and the clutter suppression can be performed in any order when the clutter suppression is performed on a pulse-by-pulse basis, which is a preferred embodiment of the radio frequency system according to the present disclosure.

In the context of the present disclosure, based on the filtered range profiles, the radio frequency system generates one or more power metrics, or synonymously amplitude metrics, or amplitude or power features. The power metrics relate the power of spatial map or of the combined range profiles to a density or a count of individuals in the groups of individuals. The power metrics may be generated through several procedures. The corresponding choice is dictated by the radio frequency system, the type of information that the radio frequency system is set to derive and by the abundance of initial evaluations of the density of the groups of individuals available in the regression. Since initial evaluations of the density of the groups of individuals are generally expensive or difficult to obtain, it is particularly desirable to use simple models with the smallest possible number of parameters.

In the context of the present disclosure, a density of the groups of individuals may be an approximate or an exact estimate of the density of the groups of individuals. In the context of the present disclosure, a density of the groups of individuals is a number of individuals per area at a given location of the space. For example, an initial evaluation of the density of the groups of individuals may be an approximate or an exact estimate of the number of individuals in the groups of individuals. In other words, a density in the context of the present disclosure is a count per meter or square meter as obtained from evaluating the groups of individuals between the at least two distances in the in the updated spatial map or in the updated combined range profile.

According to example embodiments, the radio frequency system further comprises at least one initial evaluation of the density of the groups of individuals; wherein the processing unit comprises one or more regression models; and wherein the processing unit is further configured to apply at least one of the regression models on the power metrics and on the initial evaluation of the density of the groups of individuals, thereby determining a number of individuals in the groups of individuals.

An initial evaluation of the density of the groups of individuals may be an approximate or exact estimate of the density of the groups of individuals. For example, an initial evaluation of the density of the groups of individuals may be an approximate or an exact estimate of the number of individuals in the groups of individuals. The initial evaluation of the density corresponds to a reference point for the radio frequency system according to the present disclosure. Based on at least this reference point, a model is constructed by the processing unit which relates the power metrics to the total count of individuals in the groups of individuals in the space, or alternatively the counts of individuals in the groups of individuals at one or more surveillance regions in the space.

The choice of regression model is dictated by one or more of the following: the derived total power features, a number of surveillance regions in the space, the number of initial evaluations of the density of the groups of individuals available. It may furthermore be dictated by the space in the field of view.

Accordingly, it is advantageous for the processing unit to contain a set of candidate regression models used for model structure determination. An exemplary selection of regression models includes the logarithmic and polynomial functions. The logarithmic function is particularly suited for small grazing angles since under such circumstances, the increase total power diminishes as the size of the groups of individuals increases due to blockage effects. Additionally, it is advantageous to formulate the regression as a constrained regression problem. For instance, this is advantageous when there are multiple surveillance regions so as to guarantee positive counts of the groups of individuals. In some use cases, it may not be desirable to have an exact number of the number of individuals in the groups of individuals, but rather an indicator of whether the groups of individuals are small, medium, or large depending on predetermined size values. Under such circumstances, one may either formulate the regression as a classification problem or group the regression output into different intervals.

According to example embodiments, the processing unit is further configured to, before thresholding the spatial map or the combined range profiles:
- generate one or more Doppler profiles;
- determine from the Doppler profiles a relative power distribution across the Doppler profiles; and
- identify therefrom movements within the groups of individuals, thereby determining the activity of the groups of individuals.

In the context of the present disclosure, a Doppler profile is the complex amplitude distribution of the echoes reflected from the scatterers in the space with respect to the radial velocity, i.e. with respect to either the monostatic or bistatic radial velocity. Scatterers in the space correspond to the groups of individuals, and/or the individuals, and/or other reflecting objects in the shared field of the view of the transmitters and receivers. Large Doppler shifts translate to large radial velocities, which can be used to assess an activity of the groups of individuals by relating the activity to the magnitude of the radial velocities to give a set of the groups of the individuals an activity metrics. For example, if a group of individuals is standing still, the activity metrics corresponding to large Doppler shifts has little fractional power, whereas lower velocities have larger fractional power. If the group of individuals is for example dancing, the opposite is determined.

It is advantageous to implement a Doppler processing step after the range profile formations and before the pre-detection. This can be done for example by using as a windowed fast Fourier transform across the pulses. The key advantage is the coherent integration which increases the signal to noise ratio. Due to the conservation of energy in the frequency and time domain, the total amount of power is the same as in the updated spatial map or in the updated combined range profiles, up to a constant deterministic scaling, depending on the implementation. Operating in the range-Doppler domain is therefore equivalent to the range-pulse domain, except for the improved signal to noise ratio.

Besides improving the signal to noise ratio and generating counting features, the Doppler information in the Doppler domain can be used to instantaneously assess the activity of the groups of individuals. Exemplary, one may exploit the relative power distribution across the Doppler profiles to assess whether the relative activity of the groups of individuals. This type of information may either be exemplary used independently as a secondary monitoring feature for the groups of individuals or integrated into the regression for joint counting and activity monitoring of the groups of individuals.

In the context of the present disclosure, an activity of the groups of individuals is the determination of one or more movements in the groups of individuals. A movement corresponds to the act or process of moving, for one or more individuals of one or more groups of individuals. In other words, an activity can be detected by the radio frequency system according to the present disclosure when moving parts of one or more individuals of one or more groups of individuals that transmit a definite motion of the individuals is detected. For example, an activity corresponds to one or more micro-movements of an individual, such as for example one or more movements of one or more limbs of an individual, for example when the individual is walking or running, or dancing, thereby moving his arms/hands and/or his legs/feet and/or his head.

According to example embodiments, the radio frequency system is a radar and/or a communication system.

According to example embodiments:
- when the radio frequency system is a radar, a range profile is a digitized demultiplexed signal; and
- when the radio frequency system is a communication system, a range profile is a channel impulse response acquired through channel estimation procedure.

The waveform may be a dedicated radar waveform. Under such circumstances, we refer to the system as a radar system. Examples of such waveforms are chirp signals, frequency hopping signals and phase coded signals. The radar waveform may also be an orthogonal frequency division multiplexing waveform commonly used in communication systems. The radar waveform may also be a short pulse, although this is generally undesired due to the high peak power and short operating range. The radar waveform may also be an unmodulated constant frequency continuous wave signal, which has the disadvantage of not providing any spatial resolution in the range-domain, but at the advantage of using little frequency spectrum while also supporting low-complexity hardware and processing.

An important distinction between a conventional radar system and the radio frequency system according to the present disclosure is that the radio frequency system according to the present disclosure is not limited to dedicated radar signals, but communication signals originating existing communication infrastructure can also be used and it is possible to perform the characterization based on the channel state information with the radio frequency system according to the present disclosure. This is advantageous in the sense that it may be sufficient to only deploy receivers which reduces cost and is beneficial from a regulatory and spectrum utilization perspective.

According to example embodiments, the range profiles are obtained by correlation or convolution.

The range profiles may for instance be obtained by conventional correlation processing. In the case of pulsed radar systems, the digitized and demultiplexed signals may themselves form the range profiles. When the system is a communication system, the range-profiles correspond to the channel impulse responses which may be acquired from a conventional channel estimation procedure. This has the advantage of re-using the compute-platform of the communication system.

The waveform may also be a communications waveform with known transmitted symbols, such as a pilot sequence used for channel estimation. Under such circumstances, one may refer to the system as a joint radar and communication system since the communication waveform is re-used for radar sensing. In such case, the communication system may exemplarily follow the LTE, 5G-NR or 802.11 standards carrying, for instance, downlink or uplink pilots. The pilot sequences may also be referred to as channel estimation, channel sounding or training sequences.

The waveform may also be a communication waveform with unknown symbols, but with known modulation and advantageously a known physical layer so that the transmitted data can be decoded. The receivers may then recover the channel impulse response by removing the impact of the modulation after the decoding. We refer to this type of implementation as being a passive radar since it operates opportunistically on surrounding transmitters. For this purpose, one may for instance use Wi-Fi 802.11 signals. It is important to emphasize that these types of systems do not infringe on the privacy of the users since the system does not need to de-encrypt the data to recover the channel impulse response. Similarly, it does not rely on the counting of other high-level attributes, such MAC addresses, for counting the crowds, which may also infringe on the privacy.

According to example embodiments, the transmitter and the receiver share the same field of view over at least one segment of the groups of individuals.

According to example embodiments, the transmitter and the receiver are positioned above the groups of individuals with a downward looking grazing angle.

The transmitters and receivers according to the present disclosure are advantageously mounted at height above the crowd with a downward looking grazing angle. Designing for a good height and grazing angle involves a trade-off in terms of crowd penetration and coverage. The transmitters and receivers may be collocated or widely separated. In the latter case, they are often referred to as having a bistatic configuration. Collocated setups are advantageous in terms of coordination and signal processing, while widely separated configurations are advantageous in terms of look-angle diversity and coverage.

A trade-off must be reached when choosing the downward looking grazing angle. Mounting the radio frequency system high above the groups of individuals is suitable for for example festivals, where the radio frequency system may be mounted at the stage platform. However, in this case, the long distance between the radio frequency system and the groups of individuals may limit the coverage and the detectability of the groups of individuals. Also, the large grazing angle reduces the sensitivity to lateral motion of the groups of individuals. On the contrary, mounting the radio frequency system low above the groups of individuals is easy to deploy on for example fences separating the groups of individuals at a festival. However, in this case, the radio waves do not penetrate at high frequencies and a small field of the view is achieved for the radio frequency system due to the beamwidth at close distances. Alternatively, the radio frequency system may be mounted on a ceiling in a covered space. In this case, the radio frequency system is easy to deploy in indoor scenarios such as for example at conferences, in hallways, etc. However, in this case, a wide beamwidth is required for coverage and a high carrier frequency is required for sensitivity to for example lateral motion.

The radio frequency system may be mounted according to a monostatic mounting wherein the antennas are positioned close to each other, or according to a bistatic mounting wherein the antennas are positioned further from each other. The advantage of the monostatic mounting is that a single unit can be used for enclosing the radio frequency system. However, it requires capabilities for simultaneous transmission and reception. The advantage of the bistatic mounting is that it does not require simultaneous transmission and reception and it provides a multi-look diversity for the radio frequency system. However, it requires a shared field of view for the transmitters and the receivers and more hardware in general for the radio frequency system.

The total power received from the groups of individuals depends on one or more of the following: the grazing angle, the elevation bandwidth, the bandwidth of the radio frequency system. These parameters determine whether the radio frequency system operates in a beam or pulse limited mode. Other parameters which influence the total power received from the groups of individuals are the carrier frequency, the number of antennas, the transmitted power and the integration time. The lower the frequency, the larger the range, the better penetration, the lower the Doppler sensitivity and the lower large form factor. On the contrary, the higher the frequency, the shorter the range, the lower penetration, the higher the Doppler sensitivity and the higher small form factor. More antennas provide better performance in terms of detection range and spatial resolution. Less antennas provides a better form factor and reduces the hardware cost. More transmitted power results in better detection. The longer the integration time, the better the detection and the Doppler sensitivity.

According to example embodiments, when the at least one transmitter transmits a sequence of orthogonal waveforms, the at least one receiver recovers a sum of the echoes originating from each transmitter.

According to example embodiments, the initial evaluation of the density of the groups of individuals is determined by one or more of the following:
- a manual count of a number of individuals in the groups of individuals in the field of view of the radio frequency system;
- a visual system;
- a count of a number of individuals at all entrances and at all exits of the space;
- a use of any suitable radio frequency system for counting a number of individuals in the groups of individuals.

An initial evaluation of the density of the groups of individuals may be an approximate or an exact estimate of the density of the groups of individuals. For example, an initial evaluation of the density of the groups of individuals may be an approximate or exact estimate of the number of individuals in the groups of individuals. The initial evaluation of the density corresponds to a reference point for the radio frequency system according to the present disclosure. Based on at least this reference point and at least one processing unit constructs, a model is constructed by the processing unit which relates the power metrics to the total count of individuals in the groups of individuals in the space, or alternatively the counts of individuals in the groups of individuals at one or more surveillance regions in the space.

According to example embodiments, the receiver is configured to carry out background subtraction when filtering static clutter out of the range profiles, thereby removing an influence of static objects in the space.

According to example embodiments, the receiver is further configured to filter the range profiles along the pulse indices.

Below are provided three exemplary but representative modes of operation of the processing unit for generating one or more power metrics. These methods can be categorized depending on the level of synchronization between the transmitter and receiver. Namely, 1) non-coherent and unsynchronized antennas, 2) non-coherent and synchronized antennas and 3) coherent and synchronized antennas. The significance of such a categorization is that they provide a trade-off between cost, in terms of hardware, computation, manual labor, etc., and an increasing level of spatial resolution that can be used for counting of groups of individuals.

According to example embodiments, the radio frequency system comprises a single transmitter and a single receiver, and wherein the transmitter and the receiver are unsynchronized and non-coherent.

A preferable example of such a setup would be low bandwidth access points, i.e. receivers, distributed over for example a festival, operating for instance on Wi-Fi signals in the 2.4GHz ISM band. Such a radio frequency system would operate on the infrastructure despite being unsynchronized and non-coherent. In this mode, there is either a) a single transmitter and a single receiver or b) multiple transmitters and receivers operating non-coherently. The case b) implies that the same operations as in a) is done, but with the final output being averaged over the plurality of pairs of transmitters and receivers. The output is a single power metric that is later used to estimate the total count of individuals in the space. In case b), one may alternatively combine the filtered range profiles from each receiver non-coherently and then form the power metric. The radio frequency system proceeds with generating a spatial map or at least one combined range profile by combining the filtered range profiles from the transmitter and the receiver. After thresholding the spatial map or the combined range profiles, thereby generating an updated spatial map or updated combined range profiles, the radio frequency system then proceeds with determining a total amount of power in the updated spatial map or updated combined range profiles. This can be done by a direct averaging of all range cells, or by performing a pre-detection in order to reject the noise. The pre-detection can for instance be done by thresholding at a certain level of the noise floor. For instance, one may estimate the noise floor with the median of the absolute value of the range profiles and calculate the total power as the average of the cells residing at for example a threshold of for example 10-15 dB above the median. Prior to averaging the range cells, it may be advantageous to range normalize the filtered range profiles to eliminate or reduce the effect of distance dependencies. This is done for example by multiplying the range cells with a distance dependent factor, referred to as a normalizer. The functional form of the normalizer will depend on the frequency and bandwidth of the radio frequency system and on the grazing and mounting angles. As an example, for a range cell with an amplitude A at a distance R, the normalization may be done by dividing A with R². Depending on the setup, the normalization may alternatively be done by dividing A and R^{α} where α is a normalization exponent. Different values of α will account for different types of scattering mechanisms in the space. It is furthermore advantageous to implement a Doppler processing step after the range profile formations and before the pre-detection. If M orthogonal transmitters and N receivers are used, then there will be M*N power metrics in total. These can either be averaged and provided to the processing unit, or directly provided to the processing unit. The advantage of the former is that less reference data can be used in the regression. The advantage of the latter is that it allows for counting over large non-homogenous spaces, i.e., for example some antennas are for example in a bar, others are in the audience, other in the bathrooms etc. The power from each space will on average be proportional to a different count.

According to example embodiments, the radio frequency system comprises a single transmitter and a single receiver, and wherein the transmitter and the receiver are synchronized and non-coherent.

This mode of functioning for the radio frequency system differs from the previous unsynchronized mode in that the range information can be used for regional counting. It is termed single transmitter and single receiver for the same reasons as in 1) - either one outputs all power metrics from all regions of the space, or one averages the powers non-coherently. The advantages and disadvantages of each methods are the same as in configuration 1). An example of such an implementation would be access points, i.e., receivers, distributed in a festival for example, as in 1), where an operator manages to synchronize the transmitters and receivers. This can for instance be done for example in a wired or wireless way, using ping-pong schemes or GNSS synchronization. Another example could be dedicated radar systems. This mode operates as in 1) but generates the power metric over different segments of the range profiles. This provides a metric for estimating the number of individuals in the groups of individuals at different regions of the space visible in the field of view. When the transmitters and receivers are collocated, or in the case of a single transmitter and receiver, then the power metrics are obtained over ellipsoidal, or circular, sectors in the space. When the transmitters and receivers are widely separated, and more than one, then the intersection of ellipsoids, or circles, provide spatial localization which allows the power metrics to be derived over different regions in the space. For example, if the transmitters and receivers are collocated and the range profile covers a distance ranging 10 to 100 meters, then the power metrics may be divided into segments in range. For instance, one may construct three power metrics spanning 10-40m, 40-70m, and 70-100m, which allows the count of the number of individuals in the groups of individuals to be estimated in those regions of the space.

According to example embodiments, the radio frequency system comprises a plurality of transmitters and a plurality of receivers, and wherein the transmitters and the receivers are synchronized and coherent.

This mode of functioning for the radio frequency system operates as in 1) and 2), but with improved spatial resolution facilitated by coherently combining the transmitter and receiver signals. This provides flexibility in the choice of regions of the space where the power metrics can be derived. An example of such a radio frequency system would be synchronized multiantenna systems, such as access points with several receivers or transmitters, operating for example in the 2.4 GHz WiFi band, being synchronized with each other. It could also be a future dense cellular or distributed cell-free system being synchronized and coherent through a shared front/backhaul. It would also be a dedicated distributed radar system. In the case of collocated antennas, the coherent combining provides angular information. Combined with the range profile information, range angle maps can be constructed, which in turn can be converted to a cartesian map. This allows the power metrics to be derived at different regions of the space. For instance, if only two dimensions are considered and the transmitters and receivers are located at (x=0, y=0) m, one may construct power metrics spanning four quadrants in the field of view. The quadrants may for instance be rectangles of length (dx=20, dy=20) m with center locations (x=-10, y=10), (x=10, y=10), (x=-10, y=30), (x=10, y=30), providing four quadrants covering the region -10 to 10 m in the x dimension and 0 to 40 meter in the y-direction. The situation is analogous when the transmitters and receivers are widely distributed.

According to example embodiments, the radio frequency system comprises a plurality of transmitters and a plurality of receivers, and wherein the transmitters and the receivers are unsynchronized and coherent.

Coherent but unsynchronized antennas is also a possible mode of functioning for the radio frequency system, and may be one favorable implementation when using, for instance, one receiving array to do the counting of the groups of individuals from unsynchronized communication signals, since such a setup is able to divide the count of groups of individuals into angular sectors but not distance, due to asynchrony. Similarly, we note that some subsets of the antennas may, for instance, be coherent and synchronized while others not. A person skilled in the art understands that such heterogeneous systems can for example be processed in a hierarchical manner and are hence not limited by the categories presented.

According to a second example aspect of the present disclosure, there is provided a method for characterizing one or more groups of individuals in a space, the method comprising the steps of:
- transmitting at least two waveforms with at least one transmitter;
- with at least one receiver to which the waveforms are at least partially known, receiving echoes of the waveforms being reflected by the groups of individuals and/or the space;
- therefrom and for each waveform, generating a range profile comprising a range distribution of the echoes;
- filtering static clutter out of the range profiles based on the waveforms known to the receiver, thereby generating filtered range profiles;
- range normalizing the filtered range profiles;
- combining the filtered range profiles from the transmitter and the receiver, thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals in the space.

With the method for characterizing one or more groups of individuals in a space according to a second example aspect of the present disclosure, it is possible to count groups of individuals in a specific area and/or to determine their activity in the specific area. Additionally, it becomes possible to count and characterize groups of individuals with the method according to the present disclosure according to their level of activity by using the motion information of the groups of individuals, without the need for high spatial resolution, object association or object tracking. Instead of a conventional radar system which relies on explicit detection of individual objects, the method according to the present disclosure does not resolve, detect and/or track each individual member of one or more groups, and the method according to the present disclosure does not count and/or determine an activity of each constituting member of the groups. This allows the efficient monitoring and characterization of larger groups of individuals than the groups which can be resolved by radar system known from the prior art. In other words, the method according to the present disclosure does not need to detect individuals of the groups, it does not depend on light conditions in the space in which the groups of individuals evolve, and only a single sensor is needed to observe large groups of individuals, such as for example a few hundreds of individuals, thereby making the method according to the present disclosure cost efficient.

According to a third example aspect of the present disclosure, there is provided the use of a radio frequency system according to a first example aspect of the present disclosure for determining a density and/or an activity of groups of individuals in a space.

According to a fourth example aspect of the present disclosure, there is provided a computer-implemented method for characterizing one or more groups of individuals (2) in a space (3), the computer-implemented method comprising the steps of:
- obtaining echoes of at least two waveforms reflected by group of individuals (2) and/or space (3), wherein the waveforms (11;12) are transmitted by a transmitter (101) and are at least partially known to a receiver (102);
- therefrom and for each waveform (11;12), generating a range profile comprising a range distribution of the echoes (21;22);
- filtering static clutter out of the range profiles based on the waveforms (11;12) known to the receiver (102), thereby generating filtered range profiles;
- range normalizing the filtered range profiles;
- combining the filtered range profiles from the transmitter (101) and the receiver (102), thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals (2) in the space (3).

According to a fourth example aspect of the present disclosure, there is provided a computer program product comprising computer-executable instructions for causing a system to perform at least the following:
- transmitting at least two waveforms with at least one transmitter;
- with at least one receiver to which the waveforms are at least partially known, receiving echoes of the waveforms being reflected by the groups of individuals and/or the space;
- therefrom and for each waveform, generating a range profile comprising a range distribution of the echoes;
- filtering static clutter out of the range profiles based on the waveforms known to the receiver, thereby generating filtered range profiles;
- range normalizing the filtered range profiles;
- combining the filtered range profiles from the transmitter and the receiver, thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals in the space.

According to a fifth example aspect of the present disclosure, there is provided a computer readable storage medium comprising computer-executable instructions for performing the following steps when the program is run on a computer:
- transmitting at least two waveforms with at least one transmitter;
- with at least one receiver to which the waveforms are at least partially known, receiving echoes of the waveforms being reflected by the groups of individuals and/or the space;
- therefrom and for each waveform, generating a range profile comprising a range distribution of the echoes;
- filtering static clutter out of the range profiles based on the waveforms known to the receiver, thereby generating filtered range profiles;
- range normalizing the filtered range profiles;
- combining the filtered range profiles from the transmitter and the receiver, thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals in the space.

### Brief Description of the Drawings

Some example embodiments will now be described with reference to the accompanying drawings.
Fig. 1 depicts an example embodiment of a radio frequency system according to the present disclosure.
Fig. 2 depicts an example embodiment of a power metric derived over three days at a festival in Belgium with the radio frequency system according to the present disclosure.
Fig. 3 depicts an example embodiment of a logarithmic regression on power metrics according to the present disclosure.
Fig. 4 depicts an example embodiment of a count of a density of groups of individuals according to the present disclosure.
Figs. 5 to 8 depict an example embodiment of spatial heatmaps divided into increasing Doppler velocities obtained according to the present disclosure from a festival in Belgium.
Fig. 9 shows an example embodiment of a suitable computing system for performing one or several steps in embodiments of the invention.

### Detailed Description of Embodiment(s)

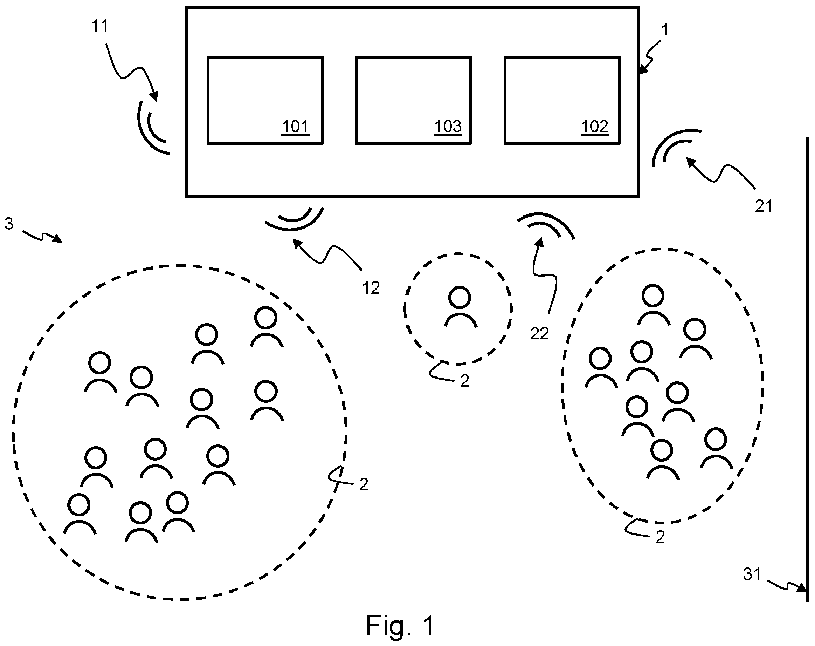

Fig. 1 illustrates an example embodiment of radio frequency system 1 according to the present disclosure. The radio frequency system 1 is used for characterizing one or more groups of individuals 2 in a space 3, wherein the space 3 for example comprises a wall 31. The radio frequency system 1 comprises at least one transmitter 101 configured to transmit at least two waveforms 11;12. The radio frequency system 1 further comprises at least one receiver 102. The waveforms 11;12 are at least partially known to the receiver 102. The receiver 102 receives echoes 21;22 of the waveforms 11;12 being reflected by the groups of individuals 2 and/or by the space 3, for example by the wall 31. From the echoes 21;22 and for each of the waveforms 11;12, the receiver 102 generates a range profile comprising a range distribution of the echoes 21;22. The receiver 102 filters static clutter out of the range profiles based on the waveforms 11;12 known to the receiver 102, thereby generating filtered range profiles. The radio frequency system 1 further comprises a processing unit 103. The processing unit 103 range normalizes the filtered range profiles. The processing unit 103 combines the filtered range profiles from the transmitter 101 and the receiver 102, thereby generating a spatial map or at least one combined range profile. The processing unit 103 thresholds the spatial map or the combined range profile, thereby generating an updated spatial map or an updated combined range profile. The processing unit 103 determines a total power between at least two distances in the updated spatial map or in the updated combined range profile. From the total power, the processing unit 103 generates one or more power metrics which relate the total power to a density and/or an activity of the groups of individuals 2 in the space 3. The radio frequency system 1 further optionally comprises at least one initial evaluation of the density of the groups of individuals 2. The processing unit 103 comprises one or more regression models; and the processing unit 103 is further configured to apply at least one of the regression models on the power metrics and on the initial evaluation of the density of the groups of individuals 2, thereby determining a number of individuals in the groups of individuals 2. The processing unit 103 is further configured to, before thresholding the spatial map or the combined range profiles: generate one or more Doppler profiles; determine from the Doppler profiles a relative power distribution across the Doppler profiles; and identify therefrom movements within the groups of individuals 2, thereby determining the activity of the groups of individuals 2. The radio frequency system 1 is a radar and/or a communication system. When the radio frequency system 1 is a radar, a range profile is a digitized demultiplexed signal. When the radio frequency system 1 is a communication system, a range profile is a channel impulse response acquired through channel estimation procedure. The transmitter 101 and the receiver 102 share the same field of view over at least one segment of the groups of individuals 2. The transmitter 101 and the receiver 102 are positioned above the groups of individuals 2 with a downward looking grazing angle. When the at least one transmitter 101 transmits a sequence of orthogonal waveforms, the at least one receiver 102 recovers a sum of the echoes originating from each transmitter 101. The receiver 102 is configured to carry out background subtraction when filtering static clutter out of the range profiles, thereby removing an influence of static objects in the space 3, such as for example the wall 31. The transmitter 101 and the receiver 102 may be unsynchronized and non-coherent, or synchronized and non-coherent, or synchronized and coherent, or unsynchronized and coherent.

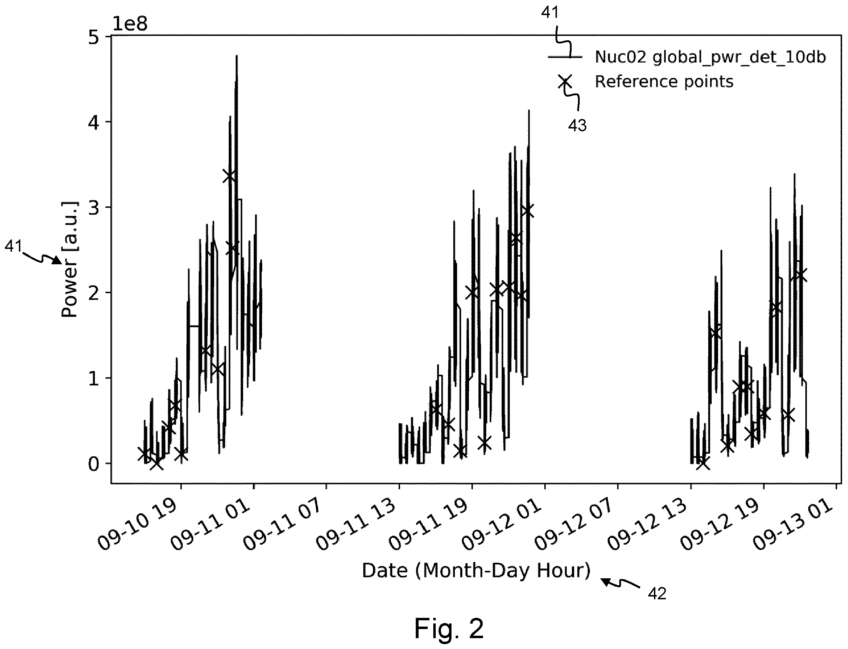

Fig. 2 depicts an example embodiment of a power metric 41 derived over three days 42 at a festival in Belgium with the radio frequency system according to the present disclosure. In this example, the radio frequency system uses a 60 GHz linearly frequency modulated continuous wave radar. The radar is commercially available from Texas Instruments and is branded as IWR6843ISK. The radar comprises three transmitters in time division multiplexing, each transmitting a total of 128 chirps. The chirp transmission period is 75 microseconds, and the transmitters transmit one after another, giving an effective transmission period of 225 microseconds. The effective chirp duration was set to 51.2 microseconds and the total bandwidth was 1.5 GHz. In addition, the radar also comprises four receiving antennas. Since the three transmitters are orthogonal by time division multiplexing, this gives rise to a total of twelve spatial channels. The background was subtracted by mean removal and the range profiles generated at each spatial channel were subjected to Doppler processing implemented as a Hanning windowed fast Fourier transform. The amplitudes were not compensated for the distance (alpha=0). The twelve range-Doppler maps were then non-coherently summed and a pre-detection threshold of 10 dB was used to reject the noise. A total of 34 reference points with reference number 43 were used. The reference points 43 were obtained by an external radio reference, for example a radio frequency counting system, and were collected over a span of three days 42. The external radio reference system indicates a maximum of X people present over three days. Empirically, logarithmic regression was found to give best performance. This is because of the diminishing returns in power with increasing crowd size. The standard deviation was estimated to -30-40 counts (depending on the outliers).

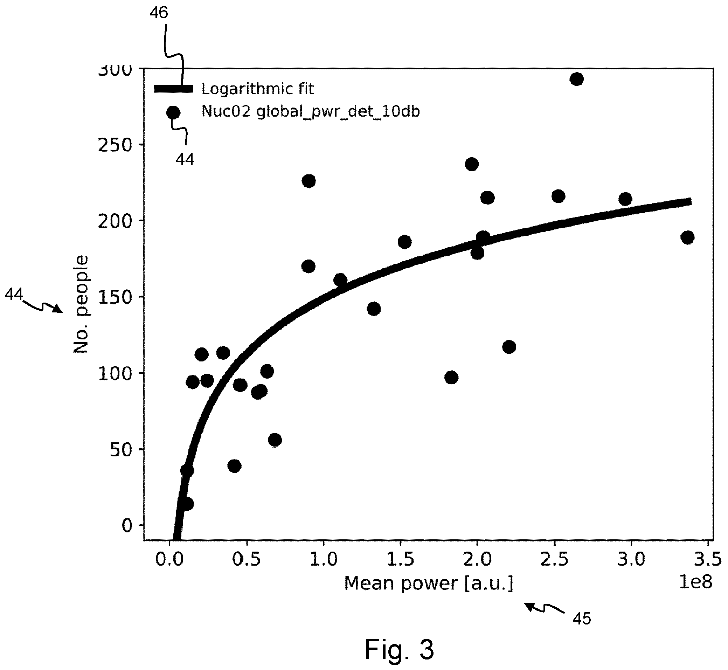

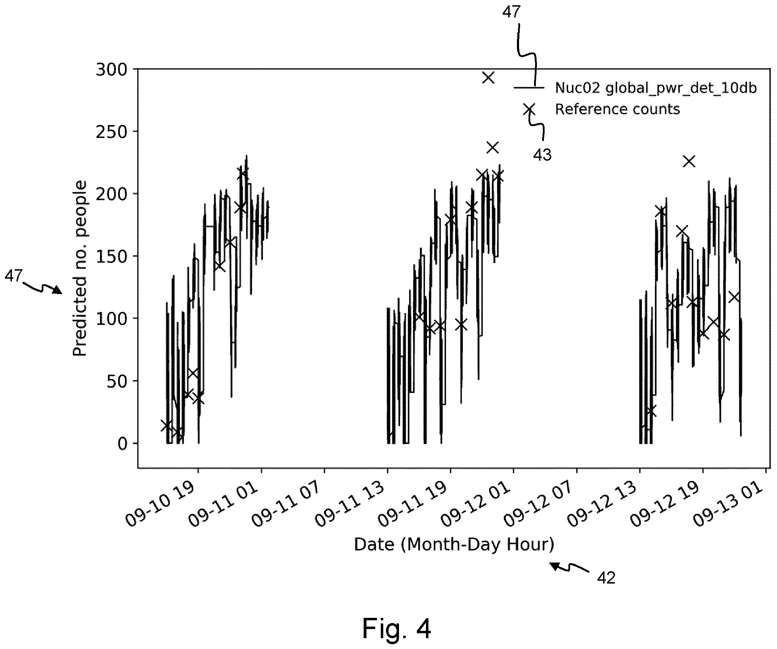

Fig. 3 depicts an example embodiment of a logarithmic regression 46 on power metrics 45 according to the present disclosure. Components having similar reference numbers than on Fig. 1 or Fig. 2 fulfill the same functions. The logarithmic regression 46 relates the crowd size 44 obtained from the radio reference of Fig. 4 to the power metric of the radio frequency system. With this method, a correlation with an R-value of 0.60 is obtained and a standard deviation of approximately 40 people is obtained.

Fig. 4 depicts an example embodiment of a count of a density of groups of individuals according to the present disclosure. Components having similar reference numbers than on Fig. 1 or Fig. 2 or Fig. 3 fulfill the same functions. The extrapolated crowd counts 47 determined by the radio frequency system according to the present disclosure are plotted over three days 42 at a festival in Belgium and are compared to the reference points 43 acquired throughout the festival.

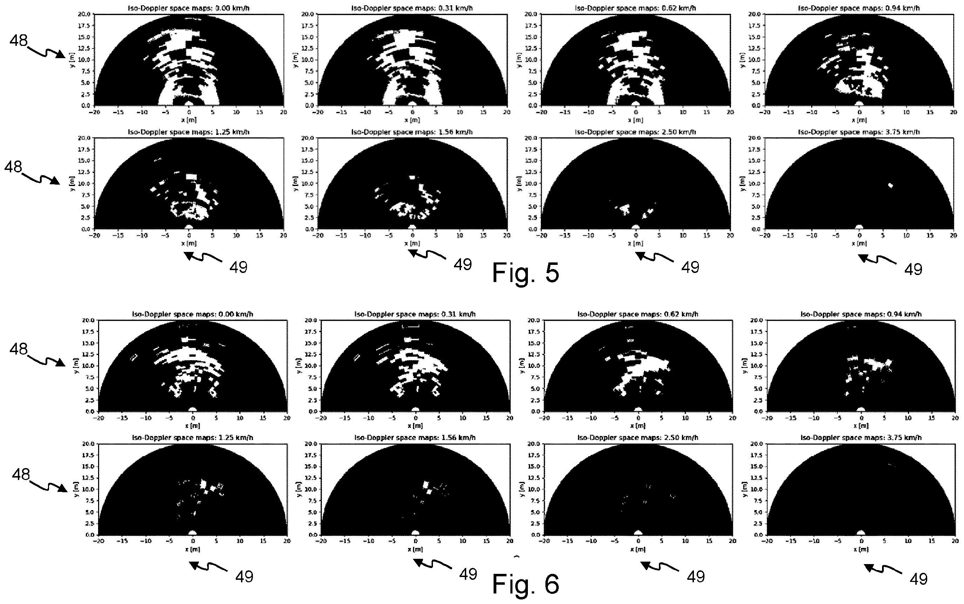

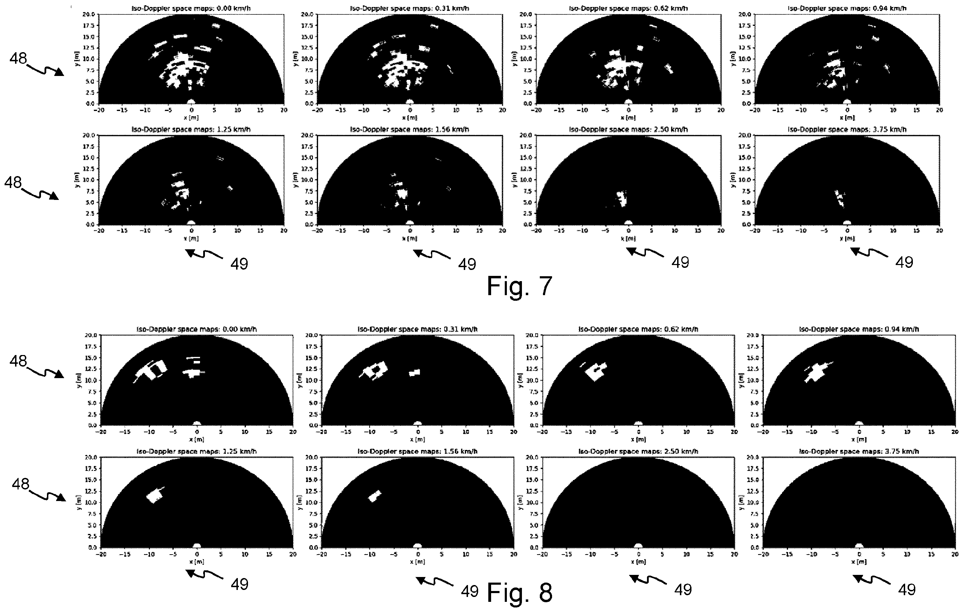

Figs. 5 to 8 depict an example embodiment of spatial heatmaps 48 divided into increasing Doppler velocities 49 obtained according to the present disclosure from a festival in Belgium. Components having similar reference numbers than on Fig. 1 or Fig. 2 or Fig. 3 or Fig. 4 fulfill the same functions. Fig. 5 is generated from a crowd during a filled concert. The crowd is dense and active, i.e., dancing, as indicated by the large powers obtained at increasing Doppler shifts. Fig. 6 is generated from a crowd watching a live performance at noon. The crowd is less dense and active when compared to the filled concert in Fig. 5. Fig. 7 is generated from a crowd with children watching a live performance during the day. The crowd is less dense than in Fig. 6, but is more active, for example the children are active, as indicated by the increased power at large Doppler shifts. Fig. 8 is generated from the empty scene, where only three workers and setting up the audio equipment. Neither a large activity, nor density is observed from the heatmaps.

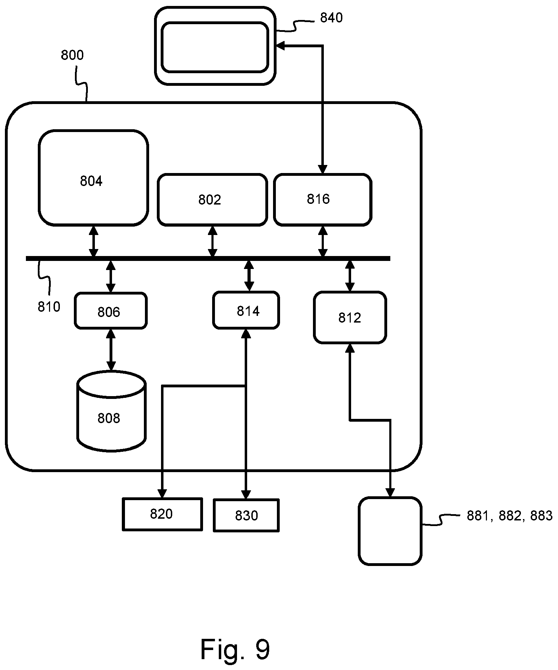

Fig. 9 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. For example, the conductors may comprise one or more wireless conductors. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus correspond to the radio frequency system 1 in the embodiment illustrated by Fig. 1.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A radio frequency system (1) for characterizing one or more groups of individuals (2) in a space (3), the radio frequency system (1) comprising:
- at least one transmitter (101) configured to transmit at least two waveforms (11;12);
- at least one receiver (102) to which the waveforms (11;12) are at least partially known; wherein the receiver (102) is configured to:
∘ receive echoes (21;22) of the waveforms (11;12) being reflected by the groups of individuals (2) and/or the space (3);
∘ therefrom and for each waveform (11;12), generate a range profile comprising a range distribution of the echoes (21;22); and
∘ filter static clutter out of the range profiles based on the waveforms (11;12) known to the receiver (2), thereby generating filtered range profiles; and
- a processing unit (103) configured to:
∘ range normalize the filtered range profiles;
∘ combine the filtered range profiles from the transmitter (101) and the receiver (102), thereby generating a spatial map or at least one combined range profile;
∘ threshold the spatial map or the combined range profile, thereby generating an updated spatial map or an updated combined range profile;
∘ determine a total power between at least two distances in the updated spatial map or in the updated combined range profile; and
∘ generate therefrom one or more power metrics, wherein the power metrics relate the total power to a density and/or an activity of the groups of individuals (2) in the space (3).

2. The radio frequency system (1) according to claim 1, wherein the radio frequency system (1) further comprises at least one initial evaluation of the density of the groups of individuals (2); wherein the processing unit (103) comprises one or more regression models; and wherein the processing unit (103) is further configured to apply at least one of the regression models on the power metrics and on the initial evaluation of the density of the groups of individuals (2), thereby determining a number of individuals in the groups of individuals (2).

3. The radio frequency system (1) according to any of the preceding claims, wherein the processing unit (103) is further configured to, before thresholding the spatial map or the combined range profiles:
- generate one or more Doppler profiles;
- determine from the Doppler profiles a relative power distribution across the Doppler profiles; and
- identify therefrom movements within the groups of individuals (2), thereby determining the activity of the groups of individuals (2).

4. The radio frequency system (1) according to any of the preceding claims, wherein the radio frequency system (1) is a radar and/or a communication system.

5. The radio frequency system (1) according to claim 4, wherein:
- when the radio frequency system (1) is a radar, a range profile is a digitized demultiplexed signal; and
- when the radio frequency system (1) is a communication system, a range profile is a channel impulse response acquired through channel estimation procedure.

6. The radio frequency system (1) according to any of the preceding claims, wherein the transmitter (101) and the receiver (102) share the same field of view over at least one segment of the groups of individuals (2).

7. The radio frequency system (1) according to any of the preceding claims, wherein the transmitter (101) and the receiver (102) are positioned above the groups of individuals (2) with a downward looking grazing angle.

8. The radio frequency system (1) according to any of the preceding claims, wherein, when the at least one transmitter (101) transmits a sequence of orthogonal waveforms, the at least one receiver (102) recovers a sum of the echoes originating from each transmitter (101).

9. The radio frequency system (1) according to any of the preceding claims, wherein the receiver (102) is configured to carry out background subtraction when filtering static clutter out of the range profiles, thereby removing an influence of static objects in the space (3).

10. The radio frequency system (1) according to any of the preceding claims, wherein the radio frequency system (1) comprises a single transmitter (101) and a single receiver (102), and wherein the transmitter (101) and the receiver (102) are unsynchronized and non-coherent.

11. The radio frequency system (1) according to any of the claims 1 to 9, wherein the radio frequency system (1) comprises a single transmitter (101) and a single receiver (102), and wherein the transmitter (101) and the receiver (102) are synchronized and non-coherent.

12. The radio frequency system (1) according to any of the claims 1 to 9, wherein the radio frequency system (1) comprises a plurality of transmitters (101) and a plurality of receivers (102), and wherein the transmitters (101) and the receivers (102) are synchronized and coherent.

13. The radio frequency system (1) according to any of the claims 1 to 9, wherein the radio frequency system (1) comprises a plurality of transmitters (101) and a plurality of receivers (102), and wherein the transmitters (101) and the receivers (102) are unsynchronized and coherent.

14. A method for characterizing one or more groups of individuals (2) in a space (3), the method comprising the steps of:
- transmitting at least two waveforms (11;12) with at least one transmitter (101);
- with at least one receiver (102) to which the waveforms (11;12) are at least partially known, receiving echoes (21;22) of the waveforms (11;12) being reflected by the groups of individuals (2) and/or the space (3);
- therefrom and for each waveform (11;12), generating a range profile comprising a range distribution of the echoes (21;22);
- filtering static clutter out of the range profiles based on the waveforms (11;12) known to the receiver (102), thereby generating filtered range profiles;
- range normalizing the filtered range profiles;
- combining the filtered range profiles from the transmitter (101) and the receiver (102), thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals (2) in the space (3).

15. A computer-implemented method for characterizing one or more groups of individuals (2) in a space (3), the computer-implemented method comprising the steps of:
- obtaining echoes of at least two waveforms reflected by group of individuals (2) and/or space (3), wherein the waveforms (11;12) are transmitted by a transmitter (101) and are at least partially known to a receiver (102);
- therefrom and for each waveform (11;12), generating a range profile comprising a range distribution of the echoes (21 ;22);
- filtering static clutter out of the range profiles based on the waveforms (11;12) known to the receiver (102), thereby generating filtered range profiles;
- range normalizing the filtered range profiles;
- combining the filtered range profiles from the transmitter (101) and the receiver (102), thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals (2) in the space (3).

16. A computer program product comprising computer-executable instructions for causing a system to perform at least the following:
- transmitting at least two waveforms (11;12) with at least one transmitter (101);
- with at least one receiver (102) to which the waveforms (11;12) are at least partially known, receiving echoes (21;22) of the waveforms (11;12) being reflected by the groups of individuals (2) and/or the space (3);
- therefrom and for each waveform (11;12), generating a range profile comprising a range distribution of the echoes (21;22);
- filtering static clutter out of the range profiles based on the waveforms (11;12) known to the receiver (102), thereby generating filtered range profiles;
- range normalizing the filtered range profiles;
- combining the filtered range profiles from the transmitter (101) and the receiver (102), thereby generating a spatial map or at least one combined range profile;
- thresholding the spatial map or the combined range profile, thereby generating an updated spatial map or an updated combined range profile;
- determining a total power between at least two distances in the updated spatial map or in the updated combined range profile; and
- generating therefrom one or more power metrics, wherein the power metrics relate the total power to a density and/or an activity of the groups of individuals (2) in the space (3).
